# EUROPÄISCHE PATENTANMELDUNG

(11) **EP 0 739 671 A2**
(43) Veröffentlichungstag der Anmeldung: **30.10.1996**
(21) Anmeldenummer: 96105833.6
(22) Anmeldetag: 13.04.1996
(51) Int. Cl.: B23B 31/12

(54) **Wellenlager an einer Bearbeitungsmaschine**

(30) Priorität: 25.04.1995 CH 1180/95
(71) Anmelder: MDC Max Dätwyler Bleienbach AG, CH-3368 Bleienbach (CH)
(72) Erfinder: Dätwyler, Max, 3368 Bleienbach (CH)
(74) Vertreter: Patentanwälte Schaad, Balass, Menzl & Partner AG

(57) **Zusammenfassung**

Das Wellenlager zur Lagerung der Wellenenden eines zu bearbeitenden, sich drehenden Werkstückes, insbesondere eines Tiefdruckzylinders, weist ein das Wellenende einspannendes, drehbar gelagertes Spannfutter (10) mit in einem hohlen Spannkopf (11) auf. Letzteres hat radial gegen dessen Längsachse (3) verstellbar gelagerte Klemmteile (12). Jedes Klemmteil (12a; 12b; 12c) ist um eine parallel zur Längsachse (3) verlaufende Schwenkachse drehbar gelagert und in einem von der Schwenkachse entfernten Bereich entlang einer bogenförmigen, um die Längsachse (3) herum verlaufenden und zwischen ihren Enden einen abnehmenden Abstand zur Längsachse aufweisenden Führungsbahn geführt und zwecks Einspannung des Wellenendes relativ zu dieser bewegbar.

## Beschreibung

Die Erfindung betrifft ein Wellenlager an einer Bearbeitungsmaschine nach dem Oberbegriff des Patentanspruchs 1, das sich insbesondere für die Lagerung der Wellenenden eines zu bearbeitenden Tiefdruckzylinders eignet.

Ein Wellenlager dieser Art ist aus der US-A-1,770,515 bekannt und weist einen drehbaren Spannring auf, in dem schwenkbar die Klemmteile gelagert sind. Jedes Klemmteil ist auf der der Klemmfläche abgekehrten Seite mit einer ebenen Schrägfläche versehen, die mit einer ebenfalls ebenen Führungsfläche zusammenwirkt. Die Führungsflächen verlaufen etwa tangential zum Umfang des Spannringes und sind an ortsfesten Führungselementen angeordnet, die schwenkbar im Spannfutter gelagert sind. Bei einer Drehung des Spannringes werden die Klemmteile, die mit ihren Schrägflächen an den Führungsflächen anliegen, gegen die Kraft von Rückstellfedern nach einwärts verschwenkt und halten das Wellenende fest. Sowohl die Führungsflächen wie auch die mit diesen zusammenwirkenden Schrägflächen an den Klemmteilen sind verhältnismässig kurz, so dass nur geringe Bewegungswege der Klemmteile möglich sind. Aus diesem Grunde eignet sich dieses Wellenlager nur zur Aufnahme von Wellenenden eines gegebenen Durchmessers, für den das Wellenlager ausgelegt ist.

Der vorliegenden Erfindung liegt nun die Aufgabe zugrunde, ein Wellenlager der vorgenannten Art so zu verbessern, dass das automatische Einspannen von Wellenenden mit unterschiedlichen Durchmessern bei hoher Genauigkeit der Achszentrierung möglich ist, ohne dass die Wellenenden beschädigt werden.

Diese Aufgabe wird durch ein Wellenlager mit den Merkmalen des Patentanspruchs 1 gelöst.

Durch den besonderen Verlauf der gekrümmten Führungsbahnen um die Längsachse des Spannkopfes herum mit abnehmendem Abstand zu dieser Längsachse wird erreicht, dass die Klemmteile beim Einspannvorgang eine gleichmässige Bewegung durchführen. Das hat zur Folge, dass eine genaue Zentrierung des eingespannten Wellenendes auf die Längsachse des Spannkopfes erfolgt. Im weiteren können die Führungsbahnen auch bei kompakter Bauweise verhältnismässig lang ausgebildet werden, was es erlaubt, ohne Umrüstung verschiedenartige Wellenenden festzuklemmen, deren Durchmesser in verhältnismässig weiten Grenzen variieren.

Mit dem erfindungsgemässen Wellenlager ist die grösste Angriffs- oder Klemmfläche der Klemmteilen mit dem Wellenende bei den grössten Durchmessern gegeben, und ist auch bei Wellenenden geringeren Durchmessers noch eine genügend grosse Angriffs- oder Klemmfläche vorhanden, um auch bei dünnen Wellen eine Beschädigung des Wellenendes wirksam zu verhindern. Ferner hat das erfindungsgemässe Wellenlager den Vorteil, dass der Verstellmechanismus relativ einfach ausgestaltet werden kann, so dass die Dimensionen des Wellenlagers vor allem in axialer Richtung gering gehalten werden können. Dies ermöglicht unter anderem eine problemlose Einführung des Werkstückes in das Wellenlager mit einem Hebewerkzeug.

In einer bevorzugten Ausführung des Wellenlagers erstreckt sich die Führungsbahn zumindest annähernd entlang eines Abschnittes einer Archimedischen Spirale, wodurch die Klemmteile im Spannzustand selbsthemmend sind und eine ständige Beaufschlagung der Klemmteile mit einem Druckfluid nicht mehr erforderlich ist. Dadurch ist die Betriebssicherheit auch gegeben, auch wenn ein unvorhergesehener Druckabfall in den Zuleitungen des Verstellmechanismus erfolgt.

Weitere Vorteile der vorliegenden Erfindung folgen aus den abhängigen Ansprüchen und aus der nachfolgenden Beschreibung. Die Erfindung wird nun anhand von in den schematischen Zeichnungen dargestellten Beispielen näher erläutert. Es zeigt:
- Fig. 1: teils in Ansicht und teils in Querschnitt eine Bearbeitungsmaschine mit ausgefahrenen Wellenlager, um einen Tiefdruckzylinder einzuführen,
- Fig. 2: dieselbe Bearbeitungsmaschine wie in Figur 1 mit eingefahrenen Wellenlager, um den Tiefdruckzylinder einzuspannen,
- Fig. 3: einen Schnitt in Längs- oder Achsrichtung durch ein auf einer Spindel angeformtes Spannfutter mit Spannkopf und Klemmteilen,
- Fig. 4: eine Draufsicht auf das Spannfutter in Richtung des Pfeiles E der Figur 3 und der Figur 10,
- Fig. 5: einen Querschnitt durch das Spannfutter gemäss der Linie D-D in Figur 3 und in Figur 10,
- Fig. 6: denselben Querschnitt wie in Figur 5 mit einem Wellenende geringeren Durchmessers,
- Fig. 7: einen Querschnitt durch das Spannfutter ohne Klemmteile gemäss der Linie C-C in Figur 3 und in Figur 10,
- Fig. 8: einen Querschnitt durch das Spannfutter gemäss der Linie B-B in Figur 3,
- Fig. 9: einen Querschnitt durch das Spannfutter gemäss der Linie A-A in Figur 3,
- Fig. 10: ein ähnliches Spannfutter wie in Figur 3 im Längsschnitt mit einer Variante für den Antrieb des Drehantriebsrohres,
- Fig. 11: einen Querschnitt durch das Spannfutter gemäss der Linie B-B in Figur 10, und
- Fig. 12: einen Querschnitt durch das Spannfutter gemäss der Linie A-A in Figur 10.

In den Figuren sind für dieselben Elemente dieselben Bezugszeichen verwendet, und es gelten erstmalige Erklärungen für ein Element für alle Figuren, wenn nicht ausdrücklich anders angegeben.

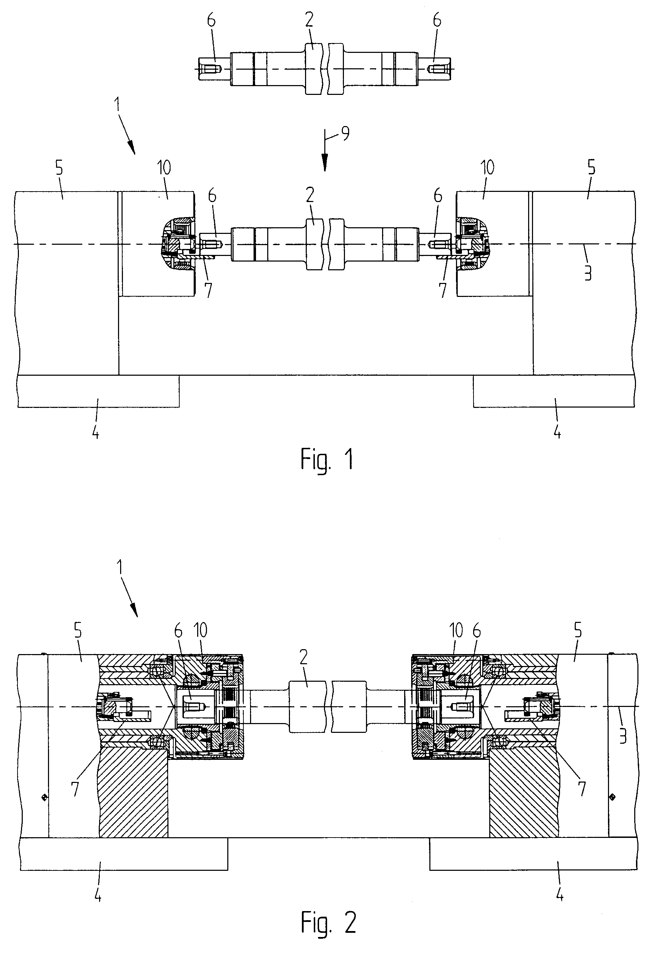

In den Figuren 1 und 2 ist rein schematisch eine Bearbeitungsmaschine 1 für ein Werkstück 2, insbesondere für einen Tiefdruckzylinder, mit zwei in Richtung der Längsachse 3 der Bearbeitungsmaschine 1 auf einem jeweiligen Maschinenschlitten 4 verschiebbar gelagerten Wellenlager 5 dargestellt. Die Wellenenden 6 des Tiefdruckzylinders 2 sind auf zwei winkelförmigen Hebearmen 7 aufgelegt, welche innerhalb der Wellenlager 5 in der Längsachse 3 der Bearbeitungsmaschine 1 mit einer hier nicht weiter dargestellten Zylinder- und Kolbeneinheit hydraulisch oder pneumatisch hin- und herbewegbar sind. Wie ersichtlich wird der Tiefdruckzylinder 2 mit seinen Wellenenden 6 von oben her mittels eines durch den Pfeil 9 angedeuteten Hebekrans auf die winkelförmigen Hebearme 7 aufgelegt. Im jeweiligen Wellenlager 5 ist ein Spannfutter 10 zur Aufnahme der Wellenenden 6 vorgesehen.

Wie aus Figur 2 ersichtlich, werden die beiden Maschinenschlitten 4 gegen den auf den Hebearmen 7 gehaltenen Tiefdruckzylinder 2 geschoben, so dass dessen Wellenenden 6 von den Spannfuttern 10 aufgenommen und eingespannt werden können. Wenn die Wellenenden 6 des Tiefdruckzylinders 2 eingespannt und zentriert sind, werden die Hebearme 7 innerhalb des jeweiligen Wellenlagers 5 zurückgezogen, d.h. vom Tiefdruckzylinder 2 mittels nicht dargestellten Kolben- und Zylindereinheiten wegbewegt, so dass die Wellenenden 6 nur noch von den Spannfuttern 10 gehalten sind (in Figur 2 dargestellter Zustand).

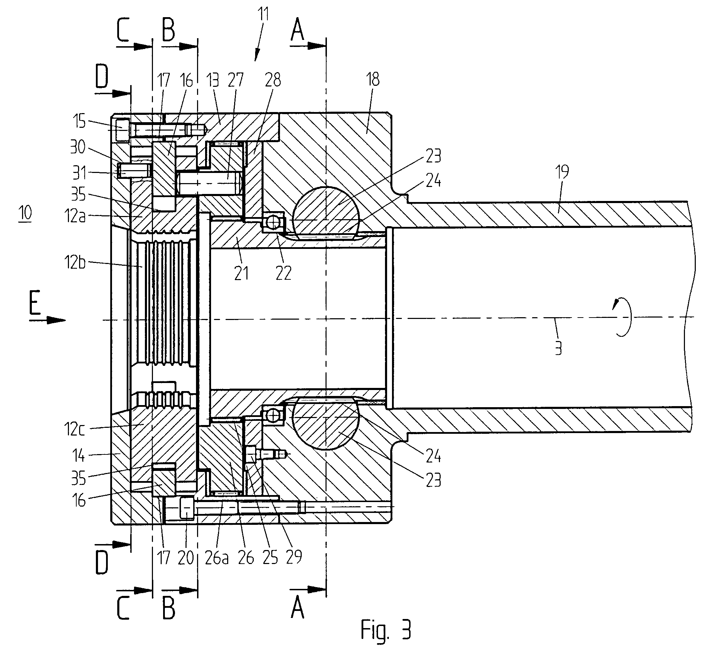

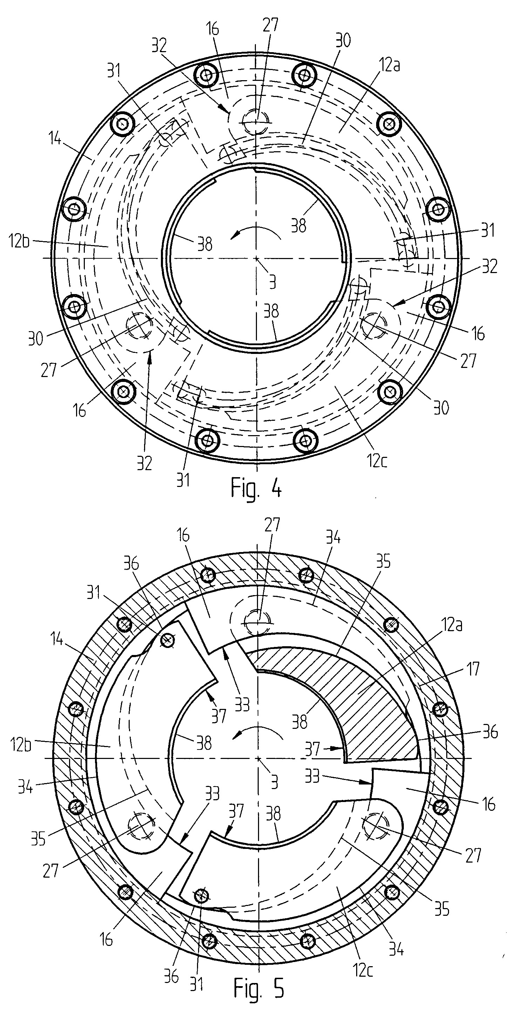

Die genaue Ausbildung des Spannfutters 10 ist in den Figuren 3 bis 9 abgebildet und wird anhand dieser erklärt. Die Figuren 4 bis 7 stellen eine Ansicht, bzw. Querschnitte gemäss der Pfeile und Schnittlinien E bis C in den Figuren 3 und 10 und die Figuren 8 und 9 die Querschnitte längs der Schnittlinien B und A in Figur 3 dar. Das Spannfutter 10 besteht aus einem Spannkopf 11 mit innerhalb diesem verstellbar gelagerten, bogenförmig gekrümmten, mit einem rechteckigen Querschnitt ausgebildeten Klemmteilen 12a, 12b, 12c. Der Spannkopf 11 weist ferner einen Zwischenring 13 und einen Aussenflansch 14 auf, die mittels Schrauben 15 miteinander befestigt sind und drei umfangmässig um die Längsachse 3 angeordnete Führungselemente oder Spannscheibensegmente 16 in einer nutenförmig zwischen ihnen gebildeten Ausnehmung 17 einklemmen. Dieser Spannkopf 11 ist stirnseitig auf einem Spindelflansch 18 einer in dem Wellenlager 5 (vergleiche Figur 1) drehbaren Spindel 19 mittels Schrauben 20 befestigt.

Innerhalb des Spindelflansches 18 ist ein Drehantriebsrohr 21 mittels eines Wälz- oder Kugellagers 22 drehbar gelagert und von zwei sich gegenüberliegenden und im Spindelflansch hin- und herbewegbaren Zahnstangen 23 angetrieben. Diese Zahnstangen 23 greifen in eine Aussenverzahnung 24 am Umfang des Drehantriebsrohres 21 ein. Auf der dem Spannkopf 11 zugewandten Seite ist am Drehantriebsrohr 21 mittels einer Kerbverzahnung 25 eine Ringscheibe 26 drehantreibbar befestigt. Diese Ringscheibe 26 ist auf einem Rollenlager 26a innerhalb des Zwischenringes 13 drehbar gelagert und trägt drei stirnseitig gegen die Klemmteile 12 und in diese hineingreifende Lager- oder Mitnahmebolzen 27, welche in Umfangsrichtung der Ringscheibe 26 mit einem Winkel von 120° zueinander verteilt sind. Diese Mitnahmebolzen 27 bilden Schwenkachsen für die Klemmteile 12a, 12b und 12c. Zwischen dem Spindelflansch 18 und der Ringscheibe 26 ist eine Lagerscheibe 28 am Spindelflansch 18 mittels Schrauben 29 angeschraubt. Diese Lagerscheibe 28 dient zur axialen Führung der Ringscheibe 26 zwischen dem Spannkopf 11 und dem Spindelflansch 18. Auf der den Klemmteilen 12a, 12b und 12c zugewandten Stirnseite des Aussenflansches 14 sind drei kreisbogenförmige Führungsnuten 30 vorgesehen, die längs eines Bogensegmentes mit einem zur Längsachse 3 abnehmenden Abstand verlaufen. In jede Führungsnut 30 greift ein Führungsstift 31 ein, der auf der dem Aussenflansch 14 zugewandten Stirnseite eines jeweiligen Klemmteils 12a, 12b oder 12c vorgesehen ist.

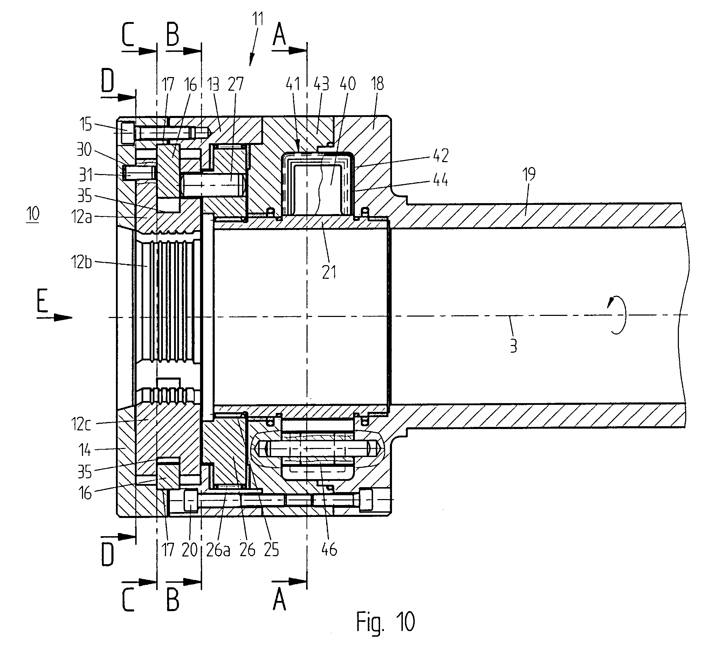

In Figur 4, welche die Ansicht in Richtung des Pfeiles E der Figuren 3 und 10 darstellt, sind die obengenannten Führungsnuten 30 in gestrichelten Linien angegeben und mit ihrem abnehmenden Abstand zur Längsachse 3 deutlich erkennbar. Ebenfalls sieht man die gestrichelt gezeichneten Umrisse der Klemmteile 12a, 12b und 12c. Auch der im Gegenuhrzeigersinn gesehen linken Endbereich 32 eines jeweiligen Klemmteiles 12a, 12b oder 12c vorgesehene Mitnahmebolzen 27 ist gestrichelt gezeigt. Ferner sieht man noch die gestrichelt angedeuteten Spannscheibensegmente 16.

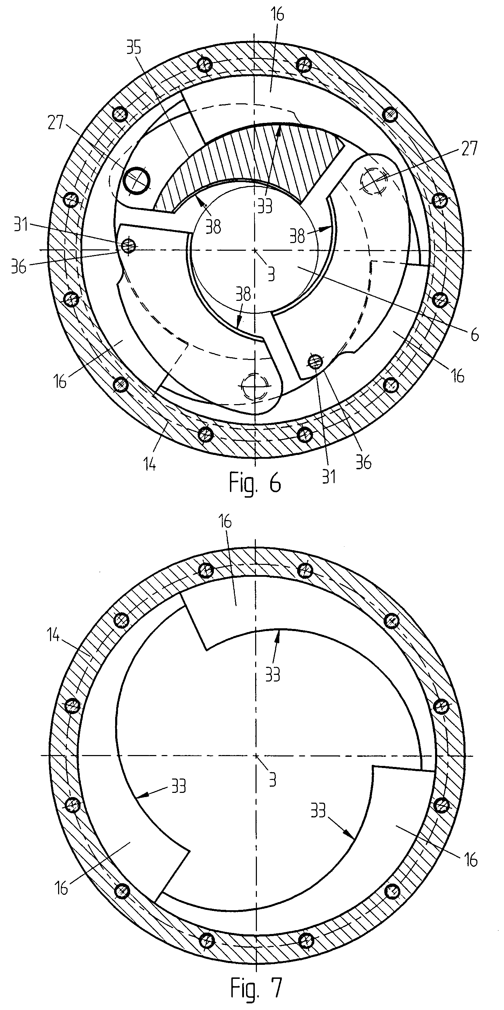

Diese Bauelemente sind noch klarer ersichtlich aus den Figuren 5 bis 8, die die jeweiligen Querschnitte durch den Spannkopf 11 längs der Linien D-D (Fig. 5 und 6), C-C und B-B darstellen. Insbesondere ist die Führungsbahn 33 der jeweiligen Spannscheibensegmente 16 angegeben, die dem jeweiligen Klemmteil 12a, 12b oder 12c zugeordnet ist. Die Klemmteile 12a, 12b und 12c weisen eine an der aussenliegenden Bogenfläche 34 eingelassene Nut 35 auf, die längs einer bogenförmigen Linie mit abnehmendem Abstand zur Längsachse 3 verläuft. Diese Nut 35 endet mit einer buckelförmigen Auflage 36, die im Endbereich 37 des jeweiligen Klemmteiles 12a, 12b oder 12c vorgesehen ist. In Figur 5 ist die Führung der buckelförmigen Auflage 36 auf der Führungsbahn 33 gut erkennbar. Weiter lässt sich der Figur 5 entnehmen, dass die Nut 35 eine grössere Krümmung aufweist als die Führungsbahn 33 des zugehörigen Spannscheibensegmentes 16, weshalb der Grund der Nut 35 bei einer Drehung in Gegenuhrzeigersinn des jeweiligen Klemmteils 12a, 12b oder 12c die Führungsbahn 33 nie berühren wird. Deshalb liegt einzig die buckelförmige Auflage 36 auf der Führungsbahn 33 auf und es ist zwischen der Nut 35 und der Führungsbahn 33 stets genügend Spiel vorhanden (vergleiche auch Figur 6).

Die Spannscheibensegmente 16 mit ihren Führungsbahnen 33 sind vor allem aus Figur 7 in ihrer Form erkennbar. Die Führungsbahnen 33 verlaufen mit Vorteil zumindest annähernd längs einer Archimedischen Spirale mit einer Steigung von 3° bis 8°, insbesondere um etwa 6,5°. Wie aus den Figuren 4 und 5 erkennbar, sind die bogenförmigen Innenflächen 38 der Klemmteile 12a, 12b und 12c kreiszylindrisch ausgebildet und umfassen in der äussersten Drehstellung den grössten Durchmesser eines Wellenendes 6 des Werkstückes oder Tiefdruckzylinders 2 (Figur 5). Bei zunehmender Drehung der Klemmteile 12a, 12b und 12c über die jeweiligen Führungsbahnen 33 wird die durch die bogenförmigen Innenflächen 38 begrenzte Aufnahmeöffnung kleiner (siehe Figur 6).

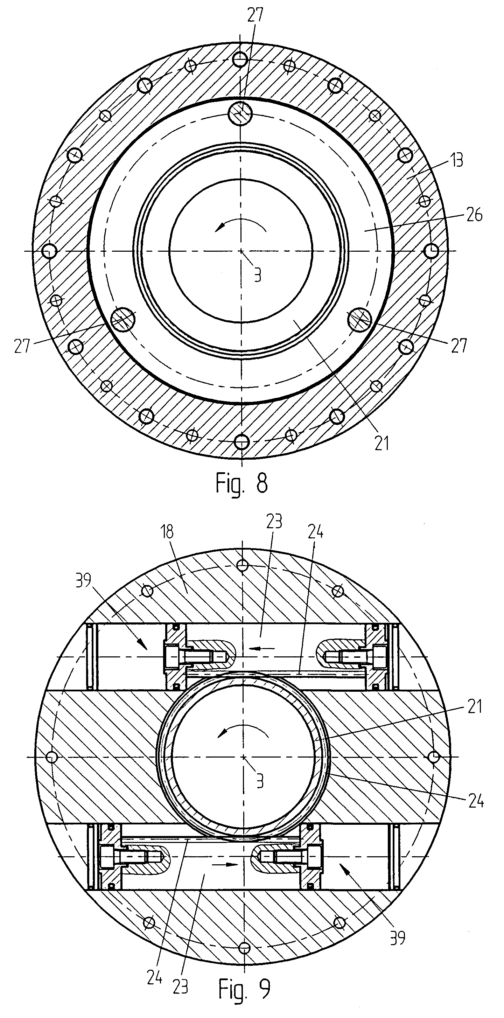

In Figur 9 ist der Antrieb und die Führung der Zahnstangen 23 innerhalb des Spindelflansches 18 ersichtlich. Diese Zahnstangen 23 werden je von einer doppelwirkenden Kolben- und Zylindereinheit 39 in der Zeichnung nach links oder nach rechts bewegt. Die Anschlüsse mit einer hydraulischen oder pneumatischen Pumpe, Zuleitungen und zugehörigen Ventilen sind allgemein bekannt und deshalb hier nicht weiter dargestellt. Durch die Verschiebung der Zahnstangen 23 wird das Drehantriebsrohr 21 mit seiner Aussenverzahnung 24 in Gegenuhrzeigersinn oder in Uhrzeigersinn gedreht. Dies bewirkt gleichzeitig eine Drehung der auf der Ringscheibe 26 befestigten Mitnahmebolzen 27, und somit eine Drehung der Klemmteile 12a, 12b und 12c längs ihrer jeweiligen Führungsbahnen 33 an den Spannscheibensegmenten 16. Die Führungsstifte 31 in den Führungsnuten 30 (Fig. 4) dienen lediglich dazu, zu verhindern, dass die Klemmteile 12a, 12b und 12c bei nicht eingesetztem Wellenende 6 gegen die Längsachse 3 nach innen fallen. Die Klemmfunktion eines jeweiligen Klemmteiles 12a, 12b und 12c wird deshalb lediglich von der buckelförmigen Auflage 36 auf der Führungsbahn 33 am Spannscheibensegment 16 ausgeübt.

Die genaue Funktionsweise des oben in allen Einzelheiten beschriebenen Wellenlagers 5 ist nun folgendermassen:

Nachdem der Tiefdruckzylinder 2 mit seinen Wellenenden 6 auf die Hebearme 7 abgelegt worden ist, werden die Maschinenschlitten 4 nach innen bewegt, wodurch die zwei Spannfutter 10 die Wellenenden 6 umgreifen. Anschliessend werden die Klemmteile 12 mittels des oben beschriebenen Verstellmechanismus durch Drehen der Mitnahmebolzen 27 und geführt durch die an der Führungsbahn 33 anliegenden buckelförmigen Auflagen 36 um die Mitnahmebolzen 27 gedreht, bis das Wellenende 6 zwischen den Klemmteilen 12 eingeklemmt ist. Wegen der Form der Führungsbahnen 33 als Archimedische Spirale ergibt sich eine Selbsthemmung zwischen einem jeweiligen Klemmteil 12a, 12b und 12c und dem zylindrischen Wellenende 6, so dass die Wellenenden 6 ohne Gegendrehen der Klemmteile 12a, 12b und 12c nicht mehr gelöst werden können. Aus diesem Grund könnte auf die weitere Beaufschlagung der Kolben- und Zylindereinheiten 39 mit Hydraulikfluid verzichtet werden. In der Praxis sind jedoch Rücksperrventile in den Zuleitungen eingebaut, die den Druck in den Kolben- und Zylindereinheiten 39 aufrecht erhalten, um die Zuleitungen nach dem Einklemmen der Wellenenden 6 drucklos zu schalten.

Diese Selbsthemmung tritt selbstverständlich auch bei geringeren Durchmessern der Wellenenden 6 auf, wie beispielsweise in Figur 6 angedeutet ist. Auch in der äussersten Stellung der Klemmteile 12a, 12b und 12c auf den jeweiligen Führungsbahnen 33 ist noch genügend Angriffsfläche zwischen dem kreiszylindrischen Wellenende 6 und den bogenförmigen Innenflächen 38 vorhanden, um die genannte Selbsthemmung zu erreichen.

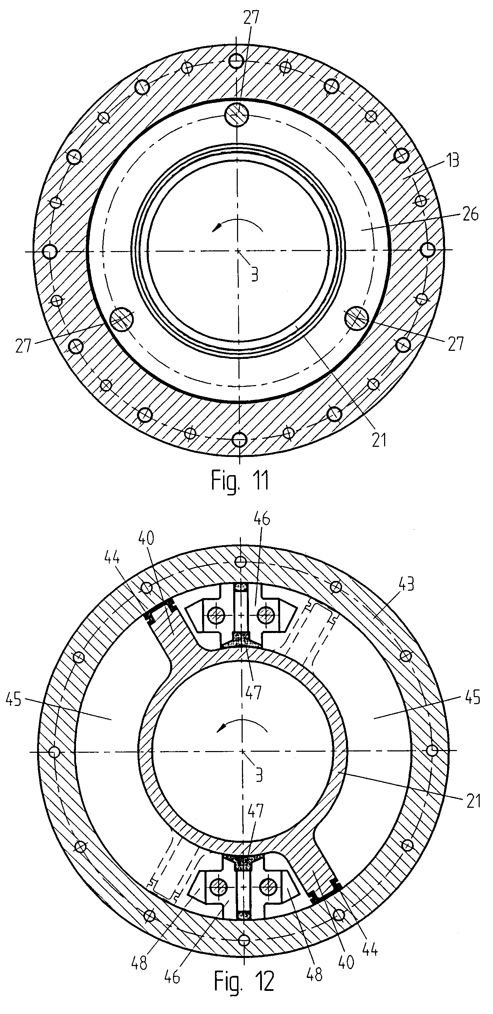

In den Figuren 10 bis 12 ist eine Variante des Antriebs für das Drehantriebsrohr 21 dargestellt. Der Spannkopf 11 des Spannfutters 10 dieser Variante ist vollkommen identisch mit dem in den Figuren 3 bis 9 gezeichneten, weshalb hier auf eine weitere Erklärung der entsprechenden Bauteile verzichtet werden kann. Die Zahnstangen 23 und die Kolben- und Zylindereinheiten 39 der ersten Ausführung sind hier jedoch ersetzt durch einen reinen hydraulischen oder pneumatischen Antrieb. Das Drehantriebsrohr 21 ist mit zwei radialen, sich diametral gegenüberliegenden Drehflügeln 40 versehen, die sich gegen den Grund 41 einer Ringnut 42 hin erstrecken, die im Spindelflansch 18 und einem an diesem anliegenden zweiten Zwischenring 43 vorgesehen ist. Die Drehflügel 40 sind endseitig mit einer kappenförmigen Dichtung 44 versehen und sind je innerhalb einer Ringkammer 45 drehbar, die durch zwei diametral sich gegenüberliegende radiale Trennelemente 46 in der Ringnut 42 gebildet sind. Diese Trennelemente 46 sind je mittels einer T-förmigen Dichtung 47 gegen das Drehantriebsrohr 21 abgedichtet. Ferner sind in Umfangsrichtung an den Seiten dieser Trennelemente 46 Anschläge 48 vorgesehen, um die Drehung der Drehflügel 40 zu begrenzen. Die andere Endposition der Drehflügel 40 ist gestrichelt dargestellt.

Die Drehflügel 40 werden nun mit einem Hydraulik- oder Pneumatikfluid beaufschlagt, welches in einen der beiden zwischen dem Drehflügel 40 und den Trennelementen 46 gebildeten Abschnitte oder Teilräume der Ringkammer 45 hineingepumpt wird. Sobald die Klemmteile 12a, 12b und 12c durch die Drehung des Drehantriebsrohres 21 das Wellenende 6 vollständig eingeklemmt haben, erhöht sich der Druck im betreffenden Ringkammerabschnitt oder Teilraum bis zu einem Maximum. Durch die vorerwähnte Selbsthemmung kann anschliessend dieser hydraulische oder pneumatische Antrieb drucklos gemacht werden, entweder ganz oder nur die mit Rücksperrventilen versehenen Zuleitungen, wie oben erwähnt. Die Drehung des Drehantriebsrohres 21 kann auch mit einem Drehflügel 40 bewerkstelligt werden, wobei in diesem Fall ein einziges radiales Trennelement 46 notwendig ist.

Es versteht sich für den Fachmann, dass die prinzipielle Wirkungsweise des erfindungsgemässen Wellenlagers auch dadurch erzielt werden kann, wenn die Spannscheibensegmente 16 gegenüber den am Spannkopf 11 befestigten und um eine feste Schwenkachse schwenkbaren Klemmteilen 12a, 12b und 12c drehbar gelagert sind. Auch braucht die Ausbildung der Innenflächen 38 der Klemmteile 12a, 12b und 12c nicht unbedingt bogenförmig zu sein, sondern können zumindest teilweise keilförmig ausgebildet sein, um die vorerwähnte Selbsthemmung zu erzielen.

## Patentansprüche

1. Wellenlager (5) an einer Bearbeitungsmaschine (1) zur Lagerung des Wellenendes (6) eines zu bearbeitenden, sich drehenden Werkstückes (2) mit einem das Wellenende (6) einspannenden, drehbar gelagerten Spannfutter (10) mit in einem hohlen Spannkopf (11) radial gegen dessen Längsachse (3) verstellbar gelagerten Klemmteilen (12), von denen jedes Klemmteil (12a; 12b; 12c) um eine parallel zur Längsachse (3) des Spannkopfes (11) verlaufende Schwenkachse drehbar gelagert und in einem von der Schwenkachse entfernten Bereich entlang einer an einem Führungselement (16) ausgebildeten Führungsbahn (33) geführt und zum Einspannung des Wellenendes (6) relativ zur zugeordneten Führungsbahn (33) bewegbar ist, dadurch gekennzeichnet, dass die Führungsbahnen (33) bogenförmig gekrümmt sind und mit abnehmendem Abstand zur Längsachse (3) des Spannkopfes (11) um letztere herum verlaufen.

2. Wellenlager nach Anspruch 1, dadurch gekennzeichnet, dass die Mittellinie der Führungsbahnen (33) in einer im wesentlichen rechtwinklig zur Längachse (3) des Spannkopfes (11) verlaufenden Ebene liegen.

3. Wellenlager nach Anspruch 1 oder 2, dadurch gekennzeichnet, dass die Schwenkachse der Klemmteile (12a; 12b; 12c) von einem auf einer zur Längsachse (3) des Spannkopfes (11) parallelen Lagerbolzen (27) gebildet ist.

4. Wellenlager nach Anspruch 3, dadurch gekennzeichnet, dass die Lagerbolzen (27) entlang einer zur Längsachse (3) des Spannkopfes (11) konzentrischen Kreisbahn bewegbar sind.

5. Wellenlager nach einem der Ansprüche 1 bis 4, dadurch gekennzeichnet, dass jedes Klemmteil (12a; 12b; 12c) mit einer etwa kreiszylindrischen Klemmfläche (38) und mit einem rechteckigen Querschnitt ausgebildet und auf der der Klemmfläche (38) abgekehrten Seite an der Führungsbahn (33) geführt ist.

6. Wellenlager nach Anspruch 5, dadurch gekennzeichnet, dass jedes Klemmteil (12a; 12b; 12c) an der der Klemmfläche abgewandten Seite eine Nut (35) aufweist, in welche das als Spannscheibensegment (16) ausgebildete Führungselement zur seitlichen Führung des Klemmteiles (12a; 12b; 12c) eingreift.

7. Wellenlager nach einem der Ansprüche 1 bis 6, dadurch gekennzeichnet, dass jede Führungsbahn (33) zumindest angenähert längs eines Abschnittes einer Archimedischen Spirale verläuft.

8. Wellenlager nach einem der Ansprüche 1 bis 7, dadurch gekennzeichnet, dass jedes Klemmteil (12a; 12b; 12c) durch einen, in einer seitlich des Klemmteils und etwa parallel zur Führungsbahn (33) verlaufenden Führungsnut (30) eingreifenden, parallel zur Schwenkachse des Klemmteils (12a; 12b; 12c) angeordneten Stift (31) geführt ist.

9. Wellenlager nach einem der Ansprüche 4 bis 8, dadurch gekennzeichnet, dass die Lagerbolzen (27) auf einer bezüglich des Spannkopfes (11) drehbaren Ringscheibe (26) befestigt sind und die Führungselemente (16) ortsfest am Spannkopf (11) festgehalten sind.

10. Wellenlager nach Anspruch 9, dadurch gekennzeichnet, dass die Ringscheibe (26) mit einem koaxial zur Längsachse (3) des Spannkopfes (11) drehbar gelagerten Drehantriebsrohr (21) in Drehantriebsverbindung steht.

11. Wellenlager nach Anspruch 10, dadurch gekennzeichnet, dass die Ringscheibe (26) mittels einer Verzahnung (25), insbesondere einer Kerbverzahnung, mit dem Drehantriebsrohr (21) verbunden ist.

12. Wellenlager nach Anspruch 10 oder 11, dadurch gekennzeichnet, dass das Drehantriebsrohr (21) mit einer Aussenverzahnung (24) versehen ist, die mindestens mit einer von einer Kolben- und Zylindereinheit hin- und herbewegbaren Zahnstange (23) in Eingriff steht.

13. Wellenlager nach Anspruch 12, dadurch gekennzeichnet, dass in der Druckfluidleitung der Kolben- und Zylindereinheit ein Sperrventil angeordnet ist, um in Spannzustand des Spannfutters (10) einen vorbestimmten Druck in der Kolben- und Zylindereinheit aufrechtzuerhalten.

14. Wellenlager nach Anspruch 10 oder 11, dadurch gekennzeichnet, dass das Drehantriebsrohr (21) mit einem diesen umgebenden Gehäuse (18, 43) eine Ringkammer (45) bildet, die durch wenigstens ein radiales Trennelement (46) in Umfangsrichtung unterteilt ist, und am Drehantriebsrohr (21) wenigstens ein radial abstehender Drehflügel (40) vorgesehen ist, welcher die Ringkammer (45) in zwei veränderbare Teilräume unterteilt, von denen jeweils einer zur Drehung des Drehantriebrohres (21) mit einem Druckfluid beaufschlagt wird.

15. Wellenlager nach Anspruch 14, dadurch gekennzeichnet, dass die Ringkammer (45) von einem zweiten radialen Trennelement (46) in zwei Ringkammern (45) aufgeteilt ist und in jede Ringkammer (45) ein radial abstehender Drehflügel (40) am Drehantriebsrohr (21) hineinragt.

16. Wellenlager nach Anspruch 14 oder 15, dadurch gekennzeichnet, dass das radiale Trennelement (46) Anschläge (48) für den Drehflügel (40) aufweist.
